# NOUVEAU FASCICULE DE BREVET EUROPEEN

(11) **EP 3 115 639 B2**
(45) Date de publication et mention de la décision concernant l'opposition: **05.01.2022**
(45) Mention de la délivrance du brevet: 07.03.2018
(21) Numéro de dépôt: 16175736.4
(22) Date de dépôt: 22.06.2016
(51) Int. Cl.: F16F 15/14

(54) **DISPOSITIF D'AMORTISSEMENT D'OSCILLATIONS DE TORSION**
VORRICHTUNG ZUR TORSIONSSCHWINGUNGSDÄMPFUNG
DEVICE FOR DAMPING TORSIONAL OSCILLATIONS

(30) Priorité: 06.07.2015 FR 1556398
(43) Date de publication de la demande: 11.01.2017
(73) Titulaire: Valeo Embrayages, 80009 Amiens Cedex 2 (FR)
(72) Inventeur: VERHOOG, Roel, 60190 GOURNAY SUR ARONDE (FR)
(74) Mandataire: Valeo Powertrain Systems

(56) Documents cités:
- EP-A1- 2 687 749
- EP-A1- 2 813 729
- EP-A1- 2 853 773
- WO-A1-2014/009112
- WO-A1-2015/086944
- WO-A2-2008/098536
- DE-A1- 3 633 584
- DE-A1- 19 831 160
- DE-A1- 19 911 560
- DE-A1-102008 005 138
- DE-A1-102011 076 790
- DE-A1-102011 085 400
- DE-A1-102012 215 078
- DE-A1-102012 217 170
- DE-A1-102013 217 089
- DE-A1-102013 222 640
- DE-A1-102013 222 647
- DE-C- 597 091
- US-A1- 2014 174 869
- DRESIG, H. et al.: "Maschinendynamik", Springer, 2005, pages 283-292, ISBN: 3-540-22546-3
- KLOTTER, K.: "Technische Schwingungslehre", Springer, 1960, pages 290-300,
- KOOY: "Auf die Isolation kommt es an - Die Evolution des Fliehkraftpendels", Schaeffler Technologies AG & Co KG, 3 April 2014 (2014-04-03), pages 78-93,

## Description

La présente invention concerne un dispositif d'amortissement d'oscillations de torsion, notamment pour un système de transmission de véhicule automobile.

Dans une telle application, le dispositif d'amortissement d'oscillations de torsion peut être intégré à un système d'amortissement de torsion d'un embrayage apte à relier sélectivement le moteur thermique à la boîte de vitesses, afin de filtrer les vibrations dues aux acyclismes du moteur.

En variante, dans une telle application, le dispositif d'amortissement d'oscillations de torsion peut être intégré à un disque de friction de l'embrayage ou à un convertisseur de couple hydrodynamique.

Un tel dispositif d'amortissement d'oscillations de torsion met classiquement en oeuvre un support et un ou plusieurs corps pendulaires mobiles par rapport à ce support, le déplacement par rapport au support de chaque corps pendulaire étant guidé par deux organes de roulement coopérant d'une part avec des pistes de roulement solidaires du support, et d'autre part avec des pistes de roulement solidaires des corps pendulaires. Chaque corps pendulaire comprend par exemple deux masses pendulaires rivetées entre elles.

Le dispositif d'amortissement d'oscillations de torsion est par exemple configuré de manière à ce que les oscillations de torsion filtrées correspondent à un ordre inférieur à 2. L'emploi du terme « ordre » signifie de façon connue que l'on filtre des fréquences variables, la fréquence filtrée par le dispositif variant avec la vitesse du moteur thermique du véhicule. Lorsque le dispositif d'amortissement d'oscillations de torsion est ainsi configuré, des problèmes de balourd aux basses vitesses, par exemple à des vitesses inférieures à 1500 tr/min, notamment inférieures à 1000 tr/min, se produisent. Au sens de la présente demande, on parle de balourd du dispositif d'amortissement d'oscillations de torsion lorsque le centre de gravité de ce dispositif n'est pas confondu avec le centre de rotation de ce dispositif, cet écart étant dans le cas présent au moins en partie causé par les corps pendulaires. La valeur et la direction de ce balourd évoluant de façon aléatoire avec le temps, les performances de filtrage des corps pendulaires aux basses vitesses sont alors dégradées.

L'état de la technique le plus proche est représenté dans le document WO 2014/009112 A1 que décrit le préambule de la revendication 1. Il existe un besoin pour remédier à tout ou partie de l'inconvénient ci-dessus. L'invention a pour objet de répondre à ce besoin et elle y parvient, selon l'un de ses aspects, à l'aide d'un dispositif d'amortissement d'oscillations de torsion, selon la revendication 1.

Le corps pendulaire présente une position de repos, et dans cette position de repos du corps pendulaire, l'organe de roulement est au contact de la position de repos sur chaque piste de roulement avec lesquelles il coopère.

Le débattement maximal du corps pendulaire correspond par exemple à un roulement de l'organe de roulement le long de chaque piste de roulement depuis la position de repos sur ladite piste jusqu'à une extrémité de cette piste, puis de cette extrémité jusqu'à l'autre extrémité de cette piste par delà la position de repos sur ladite piste, puis de cette autre extrémité de la piste jusqu'à la position de repos sur ladite piste.

Selon l'invention, au lieu de prévoir un dispositif d'amortissement d'oscillations de torsion qui ne filtrerait que la valeur d'ordre constante souhaitée, ce qui est susceptible de poser des problèmes en termes de balourd, on prévoit de ménager à proximité de la position de repos une première portion de la piste de roulement permettant le filtrage d'une valeur d'ordre supérieure à celle souhaitée. Cette portion d'ordre plus élevée étant celle qui correspond à tout ou partie des faibles débattements du corps pendulaire, les problèmes de balourd sont alors réduits, voire supprimés. Le restant de la piste de roulement est alors dimensionné par rapport à la première portion de cette piste de manière à ce que la valeur d'ordre souhaitée soit globalement filtrée par le corps pendulaire, lorsque ce dernier effectue un débattement maximal. On parvient ainsi à filtrer la valeur d'ordre souhaitée en remédiant au problème de balourd.

Au sens de la présente demande :
- « axialement » signifie « parallèlement à l'axe de rotation du support »,
- « radialement » signifie « le long d'un axe appartenant à un plan orthogonal à l'axe de rotation du support et coupant cet axe de rotation du support»,
- « angulairement » ou « circonférentiellement » signifie « autour de l'axe de rotation du support »,
- « orthoradialement » signifie « perpendiculairement à une direction radiale »,
- « solidaire » signifie « rigidement couplé », et
- la position de repos des corps pendulaires est celle dans laquelle les corps pendulaires sont soumis à une force centrifuge, mais non à des oscillations de torsion provenant des acyclismes du moteur thermique.

La première portion peut s'étendre de part et d'autre de la position de repos sur ladite piste, c'est-à-dire de chaque côté de cette position de repos. La première portion est par exemple centrée sur la position de repos.

La piste de roulement peut être exclusivement constituée d'une de ses extrémités à l'autre par : une deuxième portion, la première portion contenant la position de repos, l'autre deuxième portion, et les zones de transition entre ces portions.

La première portion de la piste présente par exemple un profil circulaire selon un premier rayon constant, chaque deuxième portion de la piste présente par exemple un profil circulaire selon un même deuxième rayon constant. Le premier rayon est alors de préférence plus faible que le deuxième rayon. Lorsque les zones de transition existent, il peut s'agir de zones présentant un profil défini par un rayon variant entre les premier et deuxième rayons ci-dessus.

Chaque zone de transition peut présenter une longueur, mesurée le long de ladite piste, inférieure à la moitié de la longueur de la première portion. La troisième valeur d'ordre peut être inférieure ou égale à 2, étant par exemple strictement inférieure à 2.

La troisième valeur d'ordre est par exemple égale à l'ordre d'excitation du moteur thermique. Au sens de la présente demande, l'ordre d'excitation d'un moteur thermique est le nombre d'explosions de ce moteur par tour de vilebrequin, cet ordre d'excitation étant égal à 2 dans le cas d'un moteur thermique à 4 cylindres et à 1,5 dans le cas d'un moteur thermique à 3 cylindres.

La première valeur d'ordre peut être égale à 2 et la troisième valeur d'ordre peut être égale étant égale à 1 ou à 1,5. En variant, la première valeur d'ordre est égale à 1,5 et la troisième valeur d'ordre est égale à 1. Comme mentionné précédemment, la deuxième valeur d'ordre et chaque deuxième longueur sont alors choisies de manière à ce que le corps pendulaire filtre la troisième valeur d'ordre lors d'un débattement maximal. Lorsque la troisième valeur d'ordre est égale à 1,5, on choisit par exemple une première valeur d'ordre égale à 2, une première longueur égale à 2 mm, une deuxième valeur d'ordre égale à 1,42 et chaque deuxième longueur égale à 6 mm.

La longueur de la première portion est comprise entre 5% et 15%, étant notamment égale à 10%, de la longueur de ladite piste de roulement, cette longueur de cette piste de roulement étant mesurée entre les deux extrémités de cette piste de roulement le long de cette dernière.

Du fait de l'existence de la première portion, la piste de roulement a, au niveau de cette première portion, une forme effective différente de la forme hypothétique qu'elle aurait si elle était en totalité configurée pour ne permettre qu'un filtrage de la deuxième valeur d'ordre, et la longueur de la première portion peut en outre être choisie de manière à ce que l'écart entre la forme effective et la forme hypothétique soit supérieur à une valeur donnée de tolérance de fabrication de la piste.

La piste de roulement mentionnée ci-dessus peut être une piste de roulement solidaire du support. En variante ou en combinaison, il peut s'agir d'une piste de roulement solidaire du corps pendulaire.

Chaque piste de roulement coopérant avec l'organe de roulement peut alors comprendre :
- une première portion s'étendant au moins d'un côté, notamment de part et d'autre, de la position de repos sur ladite piste, cette première portion ayant une forme permettant la filtration de la première valeur d'ordre lorsque l'organe de roulement roule le long de cette première portion, et
- deux deuxièmes portions, disposée chacune au-delà d'une extrémité de la première portion, chaque deuxième portion ayant une forme permettant la filtration de la deuxième valeur d'ordre lorsque l'organe de roulement roule le long d'une de ces deuxièmes portions.

Chaque organe de roulement est par exemple un rouleau de section circulaire dans un plan perpendiculaire à l'axe de rotation du support. Ce rouleau peut comprendre une section transversale circulaire. Le rouleau, notamment ses extrémités axiales, peuvent être dépourvues de rebord annulaire fin. Le rouleau est par exemple réalisé en acier. Le rouleau peut être creux ou plein.

La forme des pistes de roulement précitées peut être telle que chaque corps pendulaire soit uniquement déplacé par rapport au support en translation autour d'un axe fictif parallèle à l'axe de rotation du support.

En variante, la forme des pistes de roulement peut être telle que chaque corps pendulaire soit déplacé par rapport au support à la fois :
- en translation autour d'un axe fictif parallèle à l'axe de rotation du support et,
- également en rotation autour du centre de gravité dudit corps pendulaire, un tel mouvement étant encore appelé « mouvement combiné » et divulgué par exemple dans la demande DE 10 2011 086 532.

Le dispositif comprend par exemple un nombre compris entre deux et huit, notamment trois ou six corps pendulaires. Tous ces corps pendulaires peuvent se succéder circonférentiellement. Le dispositif peut ainsi comprendre une pluralité de plans perpendiculaires à l'axe de rotation dans chacun desquels tous les corps pendulaires sont disposés.

Dans tout ce qui précède, le support peut être réalisé d'une seule pièce, étant par exemple entièrement métallique.

Le corps pendulaire peut comprendre une première et une deuxième masses pendulaires espacées axialement l'une par rapport à l'autre et mobiles par rapport au support, la première masse pendulaire étant disposée axialement d'un premier côté du support et la deuxième masse pendulaire étant disposée axialement d'un deuxième côté du support, et au moins un organe de liaison de la première et de la deuxième masses pendulaires appariant lesdites masses pendulaires.

Chaque organe de liaison peut être reçu dans une fenêtre ménagée dans le support.

Chaque corps pendulaire comprend par exemple deux organes de liaison appariant la première et la deuxième masse pendulaire, et chaque organe de liaison peut être reçu dans une fenêtre propre ménagée dans le support. Ces deux organes de liaison sont alors décalés angulairement.

La piste de roulement solidaire du corps pendulaire peut être définie par l'organe de liaison. Une portion du contour de cet organe de liaison définit par exemple cette piste de roulement solidaire du corps pendulaire. Dans ce cas, une partie du contour de la fenêtre dans laquelle est disposé cet organe de liaison peut présenter un contour fermé dont une partie définit alors la piste de roulement solidaire du support avec laquelle coopère cet organe de roulement pour guider le déplacement par rapport au support de ce corps pendulaire. Chaque extrémité d'une piste de roulement peut alors être définie comme étant une des positions de ladite piste au contact de l'organe de roulement lorsque le corps pendulaire vient en butée contre le support lors du filtrage d'une oscillation de torsion.

Un tel organe de liaison est par exemple emmanché en force via chacune de ses extrémités axiales dans une ouverture ménagée dans une des masses pendulaires. En variante, l'organe de liaison peut être soudé via ses extrémités axiales sur chaque masse pendulaire.

Le déplacement de chaque corps pendulaire par rapport au support est par exemple guidé par deux organes de roulement distincts et ce corps pendulaire peut comprendre deux organes de liaison appariant la première et la deuxième masses pendulaires, chaque organe de liaison définissant une piste de roulement coopérant respectivement avec un des organes de roulement. Chaque organe de roulement coopère alors avec une seule piste de roulement solidaire du corps pendulaire.

Chaque organe de roulement peut alors être uniquement sollicité en compression entre la piste de roulement solidaire du support et la piste de roulement solidaire du corps pendulaire telles que mentionnées ci-dessus. Ces pistes de roulement coopérant avec un même organe de roulement peuvent être au moins en partie radialement en regard, c'est-à-dire qu'il existe des plans perpendiculaires à l'axe de rotation dans lesquels ces pistes de roulement s'étendent toutes les deux.

En variante, chaque organe de roulement peut coopérer avec deux pistes de roulement solidaires du corps pendulaire, l'une de ces pistes de roulement étant définie par la première masse pendulaire et l'autre de ces pistes de roulement étant définie par la deuxième masse pendulaire. Chaque organe de liaison est alors par exemple un rivet, étant reçu dans une fenêtre et l'organe de roulement est alors reçu dans une cavité ménagée dans le support et distincte de cette fenêtre. Une partie du bord de cette cavité définit alors la piste de roulement solidaire du support. Chaque organe de roulement peut dans cette variante comprendre successivement axialement:
- une portion disposée dans une cavité de la première masse pendulaire et coopérant avec la piste de roulement formée par une partie du bord de cette cavité,
- une portion disposée dans une cavité du support et coopérant avec la piste de roulement formée par une partie du bord de cette cavité, et
- une portion disposée dans une cavité de la deuxième masse pendulaire et coopérant avec la piste de roulement formée par une partie du bord de cette cavité.

Dans une autre variante, le corps pendulaire peut comprendre une unique masse pendulaire, ou plusieurs masses pendulaires, disposée(s) axialement entre deux supports rigidement couplés entre eux.

Dans tout ce qui précède, le dispositif peut comprendre au moins une pièce d'interposition limitant le déplacement axial du corps pendulaire par rapport au support, évitant ainsi les chocs axiaux entre lesdites pièces, et ainsi une usure et des bruits non souhaités, notamment lorsque le support et/ou le corps pendulaire sont en métal. Plusieurs pièces d'interposition, par exemple sous forme de patins, peuvent être prévues. Les pièces d'interposition sont notamment réalisées en un matériau amortissant, tel que du plastique ou du caoutchouc.

Les pièces d'interposition sont par exemple portées par les corps pendulaires. Les pièces d'interposition peuvent être positionnées sur un corps pendulaire de manière à ce qu'il y ait toujours au moins une pièce d'interposition dont au moins une partie est axialement interposée entre une masse pendulaire et le support, quelles que soient les positions relatives du support et de ladite masse lors du déplacement par rapport au support du corps pendulaire.

Dans tout ce qui précède, chaque corps pendulaire peut être muni d'un ou plusieurs organes d'amortissement de butée, permettant de réduire les chocs entre le corps pendulaire et le support à l'issue d'un déplacement du corps pendulaire depuis la position de repos et/ou en cas de chute radiale du corps pendulaire, par exemple lors de l'arrêt du moteur thermique du véhicule.

Chaque organe d'amortissement de butée est par exemple disposé radialement entre le bord radialement intérieur de l'organe de liaison et le bord radialement intérieur de la fenêtre du support dans laquelle cet organe de liaison est reçu.

Dans un exemple particulier de mise en oeuvre de l'invention, chaque corps pendulaire comprend deux organes de liaison, chaque organe de liaison coopère avec un organe de roulement, et chaque organe de liaison est associé à un organe d'amortissement de butée.

Chaque organe d'amortissement de butée peut présenter des propriétés élastiques permettant l'amortissement des chocs liés à la venue en contact du corps pendulaire et du support. Chaque organe d'amortissement de butée est par exemple réalisé en élastomère ou en caoutchouc

L'invention a encore pour objet, selon un autre de ses aspects, un composant pour système de transmission d'un véhicule automobile, le composant étant notamment un double volant amortisseur, un convertisseur de couple hydrodynamique ou un disque d'embrayage à friction, ou un double embrayage à sec ou humide, ou un embrayage simple humide, ou un volant solidaire d'un vilebrequin, comprenant un dispositif d'amortissement d'oscillations de torsion tel que défini ci-dessus.

Le support du dispositif d'amortissement d'oscillations de torsion peut alors être l'un parmi :
- un voile du composant,
- une rondelle de guidage du composant,
- une rondelle de phasage du composant, ou
- un support distinct dudit voile, de ladite rondelle de guidage et de ladite rondelle de phasage.

L'invention a encore pour objet, selon un autre de ses aspects, une chaîne de propulsion pour véhicule automobile, comprenant :
- un moteur thermique, notamment à deux, trois, ou quatre cylindres, et
- un composant tel que défini précédemment, la troisième valeur d'ordre étant déterminée en fonction de l'ordre d'excitation de ce moteur thermique.

La troisième valeur d'ordre est notamment égale à l'ordre d'excitation du moteur thermique.

En variante, la première valeur d'ordre peut être égale à l'ordre d'excitation du moteur thermique, tandis que la deuxième valeur d'ordre est égale à une fraction de cet ordre d'excitation du moteur thermique, par exemple à la moitié de cet ordre d'excitation, la deuxième valeur d'ordre correspondant notamment à un mode de fonctionnement de ce moteur thermique dans lequel certains de ses cylindres sont désactivés.

L'invention pourra être mieux comprise à la lecture qui va suivre d'exemples non limitatifs de mise en oeuvre de celle-ci et à l'examen du dessin annexé sur lequel :
- la figure 1 représente de façon schématique et partielle un dispositif d'amortissement d'oscillations de torsion auquel peut être intégrée l'invention,
- la figure 2 représente un détail de la figure 1,
- les figures 3 et 4 représentent deux exemples distincts de réalisation d'une piste de roulement solidaire du corps pendulaire, et
- la figure 5 représente un autre exemple de dispositif d'amortissement d'oscillations de torsion auquel peut être intégrée l'invention selon les figures 3 et 4.

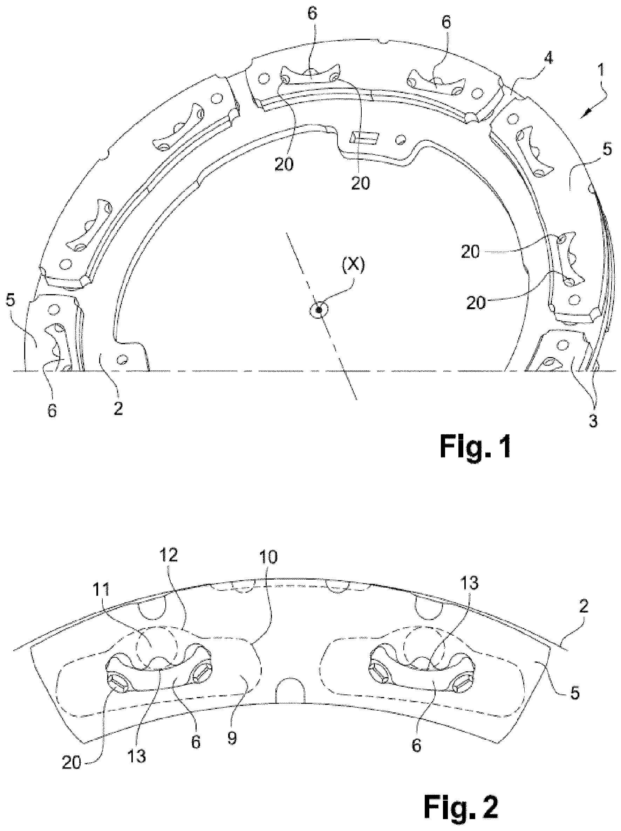

On a représenté sur la figure 1 un dispositif d'amortissement 1 d'oscillations de torsion. Le dispositif d'amortissement 1 est de type oscillateur pendulaire. Le dispositif 1 est notamment apte à équiper un système de transmission de véhicule automobile, étant par exemple intégré à un composant non représenté d'un tel système de transmission, ce composant étant par exemple un double volant amortisseur, un disque d'embrayage à friction, ou un convertisseur de couple hydrodynamique.

Ce composant fait ici partie d'une chaîne de propulsion d'un véhicule automobile, cette dernière comprenant un moteur thermique notamment à deux, respectivement trois, respectivement quatre, cylindres. L'ordre d'excitation du moteur thermique est alors respectivement égal à un, respectivement un et demi, respectivement deux.

Sur la figure 1, le dispositif 1 est au repos, c'est-à-dire qu'il ne filtre pas les oscillations de torsion transmises par la chaîne de propulsion du fait des acyclismes du moteur thermique.

De manière connue, un tel composant peut comprendre un amortisseur de torsion présentant au moins un élément d'entrée, au moins un élément de sortie, et des organes de rappel élastique à action circonférentielle qui sont interposés entre lesdits éléments d'entrée et de sortie. Au sens de la présente demande, les termes « entrée » et « sortie » sont définis par rapport au sens de transmission du couple depuis le moteur thermique du véhicule vers les roues de ce dernier.

Le dispositif 1 comprend dans l'exemple considéré:
- un support 2 apte à se déplacer en rotation autour d'un axe X, et
- une pluralité de corps pendulaires 3 mobiles par rapport au support 2.

Dans l'exemple considéré, six corps pendulaires 3 sont prévus, étant répartis de façon uniforme sur le pourtour de l'axe X.

Le support 2 du dispositif d'amortissement 1 peut être constitué par :
- un élément d'entrée de l'amortisseur de torsion,
- un élément de sortie ou un élément de phasage intermédiaire disposé entre deux séries de ressort de l'amortisseur, ou
- un élément lié en rotation à un des éléments précités et distinct de ces derniers, étant alors par exemple un support propre au dispositif 1.

Le support 2 est notamment une rondelle de guidage ou une rondelle de phasage. En variante, le support 2 est un flasque du composant.

Dans l'exemple considéré, le support 2 présente globalement une forme d'anneau comportant deux côtés opposés 4 qui sont ici des faces planes.

Comme on le devine sur la figure 1, chaque corps pendulaire 3 comprend dans l'exemple considéré :
- deux masses pendulaires 5, chaque masse pendulaire 5 s'étendant axialement en regard d'un côté 4 du support 2, et
- deux organes de liaison 6 solidarisant les deux masses pendulaires 5.

Chaque masse pendulaire 5 présente ainsi une face 7 disposée axialement en regard d'un côté 4 du support 2 et une face 8, opposée à la face 7.

Les organes de liaison 6, encore appelés « entretoises », sont dans l'exemple considéré décalés angulairement.

Chaque organe de liaison 6 s'étend en partie dans une fenêtre 9 ménagée dans le support 2. Dans l'exemple considéré, la fenêtre 9 définit un espace libre à l'intérieur du support, cette fenêtre étant délimitée par un contour fermé 10. Chaque organe de liaison 6 est solidarisé à chaque masse pendulaire 5 en étant par exemple emmanché en force dans une ouverture 18 ménagée dans ladite masse pendulaire 5.

Le dispositif 1 comprend encore dans l'exemple considéré des organes de roulement 11, visibles sur la figure 2 par exemple, et guidant le déplacement des corps pendulaires 3 par rapport au support 2. Les organes de roulement 11 sont ici des rouleaux présentant une section transversale circulaire.

Dans l'exemple décrit, le mouvement par rapport au support 2 de chaque corps pendulaire 3 est guidé par deux organes de roulement 11, chacun d'entre eux coopérant avec l'un des organes de liaison 6 de la masse pendulaire 3.

Chaque organe de roulement 11 coopère d'une part avec une piste de roulement 12 solidaire du support 2, et qui est ici formée par une partie du contour 10 de la fenêtre 9 ménagée dans le support, et d'autre part avec une piste de roulement 13 solidaire du corps pendulaire 3, et qui est ici formée par une partie du contour extérieur de l'organe de liaison 6. La piste de roulement 13 est ici de forme concave.

Plus précisément, chaque organe de roulement 11 interagit au niveau radialement intérieur avec la piste de roulement 13 et au niveau radialement extérieur avec la piste de roulement 12 lors de son déplacement par rapport au support 2 et au corps pendulaire 3, étant par exemple uniquement sollicité en compression entre les pistes de roulement 12 et 13 mentionnées précédemment.

Comme on peut le voir sur la figure 2, le dispositif 1 peut également comprendre des organes d'amortissement de butée 20 aptes à venir simultanément en contact avec un organe de liaison 6 et avec le support 2 dans certaines positions relatives du support 2 et des corps pendulaires 3, telles que les positions de venue en butée à l'issue d'un débattement depuis la position de repos. Chaque organe d'amortissement de butée 20 est ici solidaire d'un corps pendulaire 3, étant monté sur chaque masse pendulaire et disposé de manière à s'interposer radialement entre l'organe de liaison 6 et le contour 10 de l'ouverture 9.

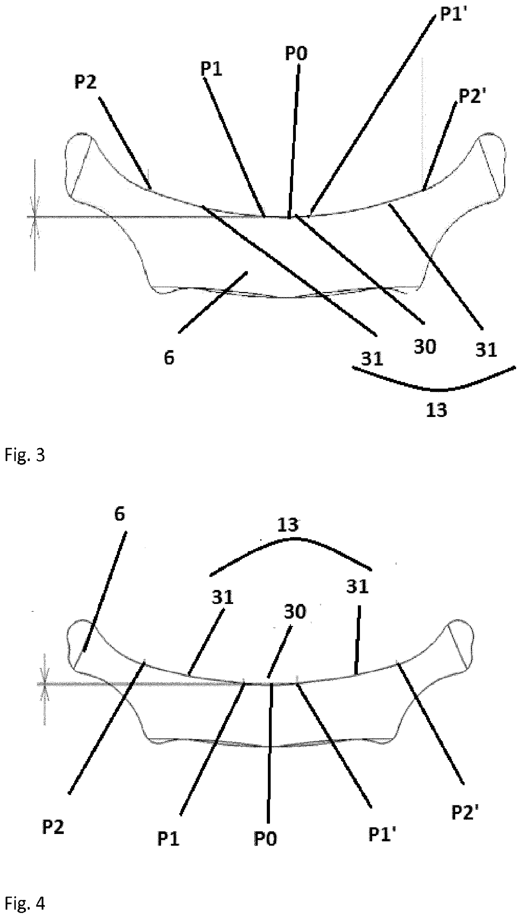

On va maintenant décrire plus en détail en référence aux figures 3 et 4 une piste de roulement 13 selon des exemples de mise en oeuvre de l'invention.

Cette piste de roulement 13 s'étend entre deux extrémités angulaires P2 et P2', qui correspondent aux positions extrêmes sur cette piste de l'organe de roulement 11 coopérant avec cette piste de roulement 13, ces positions extrêmes étant atteintes lorsque l'organe de liaison 6 vient en butée contre le support 2 lors d'un débattement maximal du corps pendulaire 3 depuis sa position de repos en cas de filtrage d'une oscillation de torsion. La position P0 de la piste de roulement 13 correspond au point de contact de l'organe de roulement 11 sur cette piste de roulement 13 lorsque le corps pendulaire 3 est au repos.

Dans l'exemple considéré, la piste de roulement 13 présente dans sa partie centrale une première portion 30 s'étendant de part et d'autre de la position P0 et cette première portion 30 est encadrée par deux deuxièmes portions 31. La première portion 30 présente dans l'exemple considéré un premier rayon constant et chaque deuxième portion 31 présente un même deuxième rayon constant qui est supérieur au premier rayon.

La première portion 30 est ici centrée sur la position P0 et elle s'étend dans le sens trigonométrique jusqu'à une position P1 et dans le sens non-trigonométrique jusqu'à une position P1', tandis que l'une des deuxièmes portions 31 s'étend entre les positions P1 et P2 alors que l'autre deuxième portion 31 s'étend entre les positions P1' et P2'.

La longueur de la première portion 30, appelée par la suite « première longueur », est mesurée entre les positions P1 et P1' le long de la piste de roulement 13, il s'agit d'une dimension curviligne, et la longueur de chaque deuxième portion 31, encore appelée par la suite « deuxième longueur », est mesurée entre les positions P1 et P2, respectivement entre les positions P1' et P2' le long de la piste de roulement. La longueur de la piste de roulement est mesurée entre les positions P2 et P2', le long de cette piste de roulement. Par souci de simplification, les zones de transition entre la première portion 30 et chaque deuxième portion 31 sont ici considérées comme ponctuelles et limitées aux points P1 et P1'.

Comme on peut le voir sur la figure 3, la première longueur est environ égale à 10% de la longueur de la piste de roulement 13.

La première portion 30 présente ici un rayon choisi de manière à ce que lorsque l'organe de roulement 11 roule le long de cette portion 30, le corps pendulaire 3 filtre une première valeur d'ordre, tandis que les deuxièmes portions 31 présentent toutes deux un même rayon choisi de manière à ce que lorsque l'organe de roulement 11 roule le long de l'une de ces portions 31, le corps pendulaire 3 filtre une deuxième valeur d'ordre.

Dans l'exemple considéré, la longueur de la première portion, la longueur de chaque deuxième portion, la première valeur d'ordre, et la deuxième valeur d'ordre sont choisies de manière à ce que le corps pendulaire 3 filtre une troisième valeur d'ordre égale à l'ordre d'excitation du moteur thermique de la chaîne de propulsion lors d'un débattement maximal de ce corps pendulaire 3. Ce débattement maximal du corps pendulaire 3 correspondant à un roulement de l'organe de roulement 11 le long de cette piste 13 :
- depuis la position P0 jusqu'à la position P2, respectivement P2',
- puis de la position P2 jusqu'à la position P2' par-delà la position P0, respectivement depuis la position P2' jusqu'à la position P2 par-delà la position P0,
- puis jusqu'au passage suivant par la position P0.

Les débattements faibles, restent ainsi limités à un parcours dans la première portion 30, de sorte qu'ils correspondent ainsi à un ordre de filtrage plus élevé que les débattements plus importants.

Dans l'exemple de la figure 3, la troisième valeur d'ordre est égale à 1,5, la première valeur d'ordre est égale à 2 avec une première longueur de 2 mm tandis que chaque deuxième portion a une longueur de 6 mm avec une deuxième valeur d'ordre de 1,42

Les premières et deuxièmes longueurs peuvent en outre être déterminées en fonction d'un paramètre additionnel prenant en compte les tolérances de fabrication. En effet, du fait de l'existence de la première portion 30, la piste de roulement 13 a une forme différente au niveau de cette première portion 30 de celle qu'elle aurait eue si la piste de roulement 13 avait eu une forme choisie pour ne permettre qu'un filtrage de la deuxième valeur d'ordre. Lorsque la différence entre ces deux formes est inférieure aux valeurs habituelles de tolérance de fabrication pour l'organe de liaison 6, il existe le risque que, pour certaines pièces, cette différence de forme n'existe pas ou ne soit pas suffisamment importante.

Comme représenté sur la figure 4, pour s'assurer que la différence de forme existera bien, même en tenant compte de la tolérance ci-dessus, il est souhaitable d'augmenter la taille de la première portion 30, et en conséquence, de réduire celle de chaque deuxième portion 31.

Tous les organes de liaison 6 de tous les corps pendulaires 3 du dispositif 1 présentent par exemple une piste de roulement 13 telle que décrite en référence à la figure 3, respectivement à la figure 4.

Chaque piste de roulement 12 solidaire du support 2 peut également être telle que décrite ci-dessus en référence avec la piste de roulement 13, c'est-à-dire présenter une première portion centrale correspondant à un ordre plus élevé que celui des deuxièmes portions qui encadrent cette première portion.

L'invention n'est pas limitée à l'exemple qui vient d'être décrit.

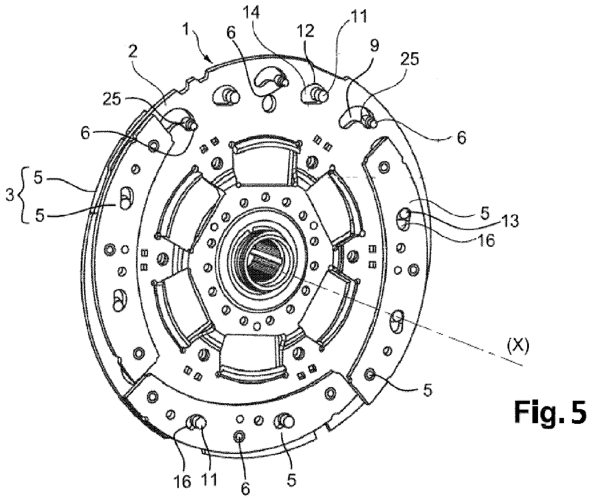

Une piste de roulement 13 telle que décrite en référence aux figures 3 et 4 peut encore être intégrée au dispositif d'amortissement de torsion de type pendulaire déjà connu et représenté sur la figure 5. Ce dispositif 1 diffère notamment de celui qui vient d'être décrit par le fait que les organes de liaison 6 et les pistes de roulement 12 et 13 sont autres. Les organes de liaison 6 sont ici des rivets, et chaque rivet 6 s'étend selon un axe qui est, dans l'exemple considéré, parallèle à l'axe de rotation X. Chaque organe de liaison 6 s'étend en partie dans une fenêtre 9 ménagée dans le support.

Toujours selon l'exemple de la figure 6, chaque organe de roulement 11 coopère d'une part avec une piste de roulement 12 définie par le support 2, et qui est ici formée par une partie du bord d'une cavité 14 ménagée dans le support 2 et distincte de la fenêtre 9, et d'autre part avec deux pistes de roulement 13 définies par le corps pendulaire 3. Chaque mass pendulaire 5 du corps pendulaire 3 présente ici, pour chaque organe de roulement 11, une cavité 16 dont une partie du bord définit une piste de roulement 13. Chacune de ces pistes de roulement 13 comprend alors une première portion 30 encadrée par deux deuxièmes portions 31, et ces premières 30 et deuxièmes 31 portions sont telles que décrites en référence aux figures 3 et 4.

Selon cet exemple, chaque organe de roulement 11 comprend successivement axialement:
- une portion disposée dans une cavité 16 de la première masse pendulaire 5 et coopérant avec la piste de roulement 13 formée par une partie du bord de cette cavité 16,
- une portion disposée dans une cavité 14 du support 2 et coopérant avec la piste de roulement 12 formée par une partie du bord de cette cavité 14, et
- une portion disposée dans une cavité 16 de la deuxième masse pendulaire 5 et coopérant avec la piste de roulement 13 formée par une partie du bord de cette cavité 16.

## Revendications

1. Dispositif (1) d'amortissement d'oscillations de torsion, comprenant :
- un support (2) apte à se déplacer en rotation autour d'un axe (X),
- au moins un corps pendulaire (3) mobile par rapport au support (2), et
- au moins un organe de roulement (11) coopérant avec au moins une piste de roulement (12) solidaire du support (2) et avec au moins une piste de roulement (13) solidaire du corps pendulaire (3) de manière à guider le déplacement du corps pendulaire (3) par rapport au support (2), l'organe de roulement (11) roulant le long de chaque piste de roulement (12, 13) autour d'une position de repos (P0) sur ladite piste,
l'une au moins de ces pistes de roulement (12, 13) s'étendant entre deux extrémités (P2, P2') et comprenant :
- une première portion (30) s'étendant au moins d'un côté depuis la position de repos (P0) sur ladite piste (12, 13), cette première portion (30) ayant une forme permettant la filtration d'une première valeur d'ordre des oscillations de torsion par le corps pendulaire (3) lorsque l'organe de roulement (11) roule le long de cette première portion (30), et
- deux deuxièmes portions (31), disposée chacune au-delà d'une extrémité (P1, P1') de la première portion (30), chaque deuxième portion (31) ayant une forme permettant la filtration d'une deuxième valeur d'ordre des oscillations de torsion par le corps pendulaire (3) lorsque l'organe de roulement (11) roule le long d'une de ces deuxièmes portions (31), la deuxième valeur d'ordre étant strictement inférieure à la première valeur d'ordre,
et **caractérisé en ce que** la longueur de la première portion (30), la longueur de chaque deuxième portion (30), la première valeur d'ordre, et la deuxième valeur d'ordre étant choisies de manière à ce que le corps pendulaire (3) filtre une troisième valeur d'ordre strictement comprise entre la première et la deuxième valeurs d'ordre lors d'un débattement maximal de ce corps pendulaire (3), la longueur de la première portion (30) étant comprise entre 5% et 15% de la longueur de la piste de roulement (12, 13), cette longueur de cette piste de roulement (12, 13) étant mesurée entre les deux extrémités (P2, P2') de cette piste de roulement (12, 13).

2. Dispositif, selon la revendication 1, la première portion (30) s'étendant de part et d'autre de la position de repos (P0) sur ladite piste (12, 13).

3. Dispositif selon l'une des revendications précédentes, chacune de la piste de roulement (13) solidaire du corps pendulaire (3) et de la piste de roulement (12) solidaire du support (2) comprenant :
- une première portion (30) s'étendant au moins d'un côté depuis la position de repos (P0) sur ladite piste, notamment de part et d'autre de cette position de repos (P0) cette première portion (30) ayant une forme permettant la filtration d'une première valeur d'ordre des oscillations de torsion par le corps pendulaire (3) lorsque l'organe de roulement roule le long de cette première portion (30), et
- deux deuxièmes portions (31), disposée chacune au-delà d'une extrémité de la première portion (30), chaque deuxième portion (31) ayant une forme permettant la filtration d'une deuxième valeur d'ordre des oscillations de torsion par le corps pendulaire (3) lorsque l'organe de roulement (11) roule le long d'une de ces deuxièmes portions (31), la deuxième valeur d'ordre étant strictement inférieure à la première valeur d'ordre,
la longueur de la première portion (30), la longueur de chaque deuxième portion (31), la première valeur d'ordre, et la deuxième valeur d'ordre étant choisies de manière à ce que le corps pendulaire (3) filtre une troisième valeur d'ordre strictement comprise entre la première et la deuxième valeurs d'ordre lors d'un débattement maximal de ce corps pendulaire.

4. Dispositif selon l'une quelconque des revendications 1 à 3, la troisième valeur d'ordre étant strictement inférieure à 2.

5. Dispositif selon la revendication 4, la première valeur d'ordre étant égale à 2 et la troisième valeur d'ordre étant égale à 1 ou à 1,5, ou la première valeur d'ordre étant égale à 1,5 et la troisième valeur d'ordre étant égale à 1.

6. Dispositif selon l'une quelconque des revendications précédentes, la longueur de la première portion (30) étant égale à 10% de la longueur de la piste de roulement (12, 13).

7. Dispositif selon l'une quelconque des revendications précédentes, le corps pendulaire (3) comprenant une première (5) et une deuxième (5) masses pendulaires espacées axialement l'une par rapport à l'autre et mobiles par rapport au support (2), la première masse pendulaire (5) étant disposée axialement d'un premier côté (4) du support (2) et la deuxième masse pendulaire (5) étant disposée axialement d'un deuxième côté (4) du support (2), et au moins un organe de liaison (6) de la première (5) et de la deuxième (5) masses pendulaires appariant lesdites masses pendulaires (5).

8. Dispositif selon la revendication 7, la piste de roulement (13) solidaire du corps pendulaire (3) étant définie par l'organe de liaison (6).

9. Dispositif selon la revendication 7, comprenant deux pistes de roulement (13) solidaires du corps pendulaire (3), une de ces pistes de roulement (13) étant définie dans la première masse pendulaire (5) et l'autre de ces pistes de roulement (13) étant définie dans la deuxième masse pendulaire (5).

10. Composant pour système de transmission d'un véhicule automobile, le composant étant notamment un double volant amortisseur, un convertisseur de couple hydrodynamique ou un disque de friction, ou un double embrayage à sec ou humide ou un embrayage simple humide, ou un volant solidaire d'un vilebrequin, comprenant un dispositif d'amortissement (1) selon l'une quelconque des revendications précédentes.

11. Chaîne de propulsion pour véhicule automobile, comprenant :
- un moteur thermique, notamment à deux, trois, ou quatre cylindres, et
- un composant selon la revendication 10, la troisième valeur d'ordre étant déterminée en fonction de l'ordre d'excitation de ce moteur thermique, étant notamment égale à l'ordre d'excitation de ce moteur thermique.

## Patentansprüche

1. Vorrichtung (1) zur Dämpfung von Torsionsschwingungen, die enthält:
- einen Träger (2), der sich in Drehung um eine Achse (X) bewegen kann,
- mindestens einen bezüglich des Trägers (2) beweglichen Pendelkörper (3), und
- mindestens ein Lauforgan (11), das mit mindestens einer fest mit dem Träger (2) verbundenen Laufbahn (12) und mit mindestens einer fest mit dem Pendelkörper (3) verbundenen Laufbahn (13) zusammenwirkt, um die Verschiebung des Pendelkörpers (3) bezüglich des Trägers (2) zu leiten, wobei das Lauforgan (11) entlang jeder Laufbahn (12, 13) um eine Ruhestellung (P0) auf der Bahn läuft,
wobei mindestens eine dieser Laufbahnen (12, 13) sich zwischen zwei Enden (P2, P2') erstreckt und enthält:
- einen ersten Abschnitt (30), der sich mindestens auf einer Seite ab der Ruhestellung (P0) auf der Bahn (12, 13) erstreckt, wobei dieser erste Abschnitt (30) eine Form hat, die die Filterung eines ersten Ordnungswerts der Torsionsschwingungen durch den Pendelkörper (3) ermöglicht, wenn das Lauforgan (11) entlang dieses ersten Abschnitts (30) läuft, und
- zwei zweite Abschnitte (31), die je jenseits eines Endes (P1, P1') des ersten Abschnitts (30) angeordnet sind, wobei jeder zweite Abschnitt (31) eine Form hat, die die Filterung eines zweiten Ordnungswerts der Torsionsschwingungen durch den Pendelkörper (3) ermöglicht, wenn das Lauforgan (11) entlang eines dieser zweiten Abschnitte (31) läuft, wobei der zweite Ordnungswert strikt niedriger als der erste Ordnungswert ist,
und **dadurch gekennzeichnet, dass** die Länge des ersten Abschnitts (30), die Länge jedes zweiten Abschnitts (31), der erste Ordnungswert und der zweite Ordnungswert so gewählt werden, dass der Pendelkörper (3) bei einem maximalen Ausschlag dieses Pendelkörpers (3) einen dritten Ordnungswert filtert, der strikt zwischen dem ersten und dem zweiten Ordnungswert liegt, wobei die Länge des ersten Abschnitts (30) zwischen 5% und 15% der Länge der Laufbahn (12, 13) liegt, wobei diese Länge dieser Laufbahn (12, 13) zwischen den zwei Enden (P2, P2') dieser Laufbahn (12, 13) gemessen wird.

2. Vorrichtung nach Anspruch 1, wobei der erste Abschnitt (30) sich zu beiden Seiten der Ruhestellung (P0) auf der Bahn (12, 13) erstreckt.

3. Vorrichtung nach einem der vorhergehenden Ansprüche, wobei jede der fest mit dem Pendelkörper (3) verbundenen Laufbahn (13) und der fest mit dem Träger (2) verbundenen Laufbahn (12) enthält:
- einen ersten Abschnitt (30), der sich mindestens auf einer Seite ab der Ruhestellung (P0) auf der Bahn, insbesondere zu beiden Seiten dieser Ruhestellung (P0), erstreckt, wobei dieser erste Abschnitt (30) eine Form hat, die die Filterung eines ersten Ordnungswerts der Torsionsschwingungen durch den Pendelkörper (3) ermöglicht, wenn das Lauforgan entlang dieses ersten Abschnitts (30) läuft, und
- zwei zweite Abschnitte (31), die je jenseits eines Endes des ersten Abschnitts (30) angeordnet sind, wobei jeder zweite Abschnitt (31) eine Form hat, die die Filterung eines zweiten Ordnungswerts der Torsionsschwingungen durch den Pendelkörper (3) ermöglicht, wenn das Lauforgan (11) entlang eines dieser zweiten Abschnitte (31) läuft, wobei der zweite Ordnungswert strikt niedriger als der erste Ordnungswert ist,
wobei die Länge des ersten Abschnitts (30), die Länge jedes zweiten Abschnitts (31), der erste Ordnungswert und der zweite Ordnungswert so gewählt werden, dass der Pendelkörper (3) bei einem maximalen Ausschlag dieses Pendelkörpers einen dritten Ordnungswert filtert, der strikt zwischen dem ersten und dem zweiten Wert liegt.

4. Vorrichtung nach einem der Ansprüche 1 bis 3, wobei der dritte Ordnungswert strikt niedriger ist als 2.

5. Vorrichtung nach Anspruch 4, wobei der erste Ordnungswert gleich 2 und der dritte Ordnungswert gleich 1 oder 1,5 ist, oder der erste Ordnungswert gleich 1,5 und der dritte Ordnungswert gleich 1 ist.

6. Vorrichtung nach einem der vorhergehenden Ansprüche, wobei die Länge des ersten Abschnitts (30) gleich 10%der Länge der Laufbahn (12, 13) liegt ist.

7. Vorrichtung nach einem der vorhergehenden Ansprüche, wobei der Pendelkörper (3) eine erste (5) und eine zweite (5) Pendelmasse enthält, die axial zueinander beabstandet und bezüglich des Trägers (2) beweglich sind, wobei die erste Pendelmasse (5) axial auf einer ersten Seite (4) des Trägers (2) und die zweite Pendelmasse (5) axial auf einer zweiten Seite (4) des Trägers (2) angeordnet ist, und mindestens ein Verbindungsorgan (6) der ersten (5) und der zweiten (5) Pendelmasse die Pendelmassen (5) paart.

8. Vorrichtung nach Anspruch 7, wobei die fest mit dem Pendelkörper (3) verbundene Laufbahn (13) vom Verbindungsorgan (6) definiert wird.

9. Vorrichtung nach Anspruch 7, die zwei fest mit dem Pendelkörper (3) verbundene Laufbahnen (13) enthält, wobei eine dieser Laufbahnen (13) in der ersten Pendelmasse (5) und die andere dieser Laufbahnen (13) in der zweiten Pendelmasse (5) definiert ist.

10. Bauteil für ein Antriebssystem eines Kraftfahrzeugs, wobei das Bauteil insbesondere ein Doppeldämpfungsschwungrad, ein hydrodynamischer Drehmomentwandler oder eine Reibscheibe oder eine trockene oder nasse Doppelkupplung oder eine nasse Einfachkupplung, oder ein fest mit einer Kurbelwelle verbundenes Schwungrad ist, das eine Dämpfungsvorrichtung (1) nach einem der vorhergehenden Ansprüche enthält.

11. Antriebsstrang für ein Kraftfahrzeug, der enthält:
- einen Verbrennungsmotor, insbesondere mit zwei, drei oder vier Zylindern, und
- ein Bauteil nach Anspruch 10, wobei der dritte Ordnungswert abhängig von der Erregerordnung dieses Verbrennungsmotors bestimmt wird, insbesondere gleich der Erregerordnung dieses Verbrennungsmotors ist.

## Claims

1. Device (1) for absorbing torsional vibrations, comprising:
- a supporting element (2) designed to move in rotation about an axis (X),
- at least one pendular body (3) that is moveable in relation to the supporting element (2), and
- at least one rolling member (11) cooperating with at least one rolling track (12) rigidly connected to the supporting element (2) and with at least one rolling track (13) rigidly connected to the pendular body (3) so as to guide the movement of the pendular body (3) in relation to the supporting element (2), the rolling member (11) rolling along each rolling track (12, 13) about an idle position (P0) on said track,
at least one of these rolling tracks (12, 13) extending between two extremities (P2, P2') and comprising:
- a first portion (30) extending at least on one side from the idle position (P0) on said track (12, 13), the shape of this first portion (30) enabling the filtration of a first order value of the torsional vibrations by the pendular body (3) when the rolling member (11) is rolling along said first portion (30), and
- two second portions (31), each arranged beyond an extremity (P1, P1') of the first portion (30), the shape of each second portion (31) enabling the filtration of a second order value of the torsional vibrations by the pendular body (3) when the rolling member (11) is rolling along one of these second portions (31), the second order value being strictly less than the first order value,
**characterized in that** the length of the first portion (30), the length of each second portion (31), the first order value, and the second order value are selected such that the pendular body (3) filters a third order value strictly between the first and the second order values when this pendular body (3) completes a maximum movement, the length of the first portion (30) being between 5% and 15% of the length of the rolling track (12, 13), this length of this rolling track (12, 13) being measured between the two extremities (P2, P2') of this rolling track (12, 13).

2. Device according to Claim 1, the first portion (30) extending to either side of the idle position (P0) on said track (12, 13).

3. Device according to one of the preceding claims, the rolling track (13) rigidly connected to the pendular body (3) and the rolling track (12) rigidly connected to the supporting element (2) each comprising:
- a first portion (30) extending at least on one side from the idle position (P0) on said track, notably on either side of this idle position (P0), the shape of this first portion (30) enabling the filtration of a first order value of the torsional vibrations by the pendular body (3) when the rolling member is rolling along this first portion (30), and
- two second portions (31), each arranged beyond an extremity of the first portion (30), the shape of each second portion (31) enabling the filtration of a second order value of the torsional vibrations by the pendular body (3) when the rolling member (11) is rolling along one of these second portions (31), the second order value being strictly less than the first order value, the length of the first portion (30), the length of each second portion (31), the first order value, and the second order value being selected such that the pendular body (3) filters a third order value strictly between the first and the second order values when this pendular body completes a maximum movement.

4. Device according to any one of Claims 1 to 3, the third order value being strictly less than 2.

5. Device according to Claim 4, the first order value being equal to 2 and the third order value being equal to 1 or 1.5, or the first order value being equal to 1.5 and the third order value being equal to 1.

6. Device according to any one of the preceding claims, the length of the first portion (30) equal to 10%, of the length of the rolling track (12, 13).

7. Device according to any one of the preceding claims, the pendular body (3) including a first pendular mass (5) and a second pendular mass (5) spaced out axially in relation to one another and movable in relation to the supporting element (2), the first pendular mass (5) being arranged axially on a first side (4) of the supporting element (2) and the second pendular mass (5) being arranged axially on a second side (4) of the supporting element (2), and at least one member (6) linking the first pendular mass (5) and the second pendular mass (5), joining said pendular masses (5) together.

8. Device according to Claim 7, the rolling track (13) rigidly connected to the pendular body (3) being formed by the linking member (6).

9. Device according to Claim 7, including two rolling tracks (13) that are rigidly connected to the pendular body (3), one of these rolling tracks (13) being formed in the first pendular mass (5) and the other of these rolling tracks (13) being formed in the second pendular mass (5).

10. Component for a transmission system of a motor vehicle, the component being notably a dual mass flywheel, a hydrodynamic torque converter or a friction disc, or a dual dry or wet clutch or a single wet clutch, or a flywheel rigidly connected to a crankshaft, including an absorbing device (1) according to any one of the preceding claims.

11. Drivetrain for a motor vehicle comprising:
- a heat engine, notably with two, three or four cylinders, and
- a component according to Claim 10, the third order value being determined as a function of the excitation order of this heat engine, being notably equal to the excitation order of this heat engine.
